Europäisches Patentamt

European Patent Office

Office européen des brevets

(11) Numéro de publication: **0 274 334 B1**

# FASCICULE DE BREVET EUROPEEN

(45) Date de publication de fascicule du brevet:
**21.08.91**

(51) Int. Cl.5: **A23B 4/02**, A22C 9/00, A23L 1/318

(21) Numéro de dépôt: **87460018.2**

(22) Date de dépôt: **30.11.87**

(54) **Procédé de traitement de la viande.**

(30) Priorité: **02.12.86 FR 8616960**

(43) Date de publication de la demande:
**13.07.88 Bulletin 88/28**

(45) Mention de la délivrance du brevet:
**21.08.91 Bulletin 91/34**

(84) Etats contractants désignés:
**AT BE CH DE ES GB GR IT LI LU NL SE**

(56) Documents cités:
| | |
|---|---|
| CA-A- 1 153 928 | DE-A- 1 955 266 |
| FR-A- 543 755 | FR-A- 2 357 182 |
| FR-A- 2 394 250 | FR-A- 2 460 113 |
| GB-A- 374 611 | US-A- 3 245 336 |
| US-A- 3 804 962 | US-A- 3 843 810 |
| US-A- 4 018 908 | US-A- 4 356 206 |
| US-A- 4 357 903 | US-A- 4 498 378 |

(73) Titulaire: **Dreano, Claude**
**Route de Perhan**
**F-56490 Guillers(FR)**

(72) Inventeur: **Dreano, Claude**
**Route de Perhan**
**F-56490 Guillers(FR)**

(74) Mandataire: **Le Guen, Louis François**
**CABINET Louis LE GUEN 38, rue Levavasseur**
**B.P. 91**
**F-35802 Dinard Cédex(FR)**

## Description

La présente invention concerne un procédé de traitement de la viande qui, d'une part, en améliore la tenue et l'aspect lors de la conservation en chambre froide ou lors de la décongélation et qui, d'autre part, l'attendrit.

Généralement, la viande fraîche une fois débitée est conservée un certain temps avant d'être consommée. Elle est alors soit congelée, soit stockée en chambre froide. Dans certains cas, notamment pour la viande de boeuf, un séjour relativement long en chambre froide est nécessaire pour "rassir" la viande, sans quoi elle est impropre à la consommation.

Pendant le stockage en chambre froide, la viande libère des exudats liquides qui sont perdus bien qu'ayant une valeur nutritive non négligeable. Il en résulte bien-sûr une perte de poids notable. De plus, les exudats libérés sont très favorables au développement des germes et des bactéries.

Pour les viandes rouges, le séjour en chambre froide peut durer en principe jusqu'à dix jours entre 2 et 4° C. Si le stockage doit se prolonger quelque peu après cette limite, la viande prend alors une coloration brunâtre qui la rend peu appétissante et difficile à vendre.

Au cas où la viande est congelée, ces inconvénients ne se présentent pas lors du stockage mais la perte de jus, et par conséquent la perte de poids, ont lieu lors de la décongélation et là aussi, elles sont importantes.

Pour information, le document US-A-4 018 908 concerne un traitement sous vide de substances cellulaires pour retirer le liquide vaporisé intercellulaire tout en gardant les parois des cellules intactes. Parmi les substances concernées, la viande est citée. En pratique, la viande est introduite dans une enceinte fermée dans laquelle on fait le vide afin d'extraire les gaz inclus et de vaporiser, au-dessous de la température de cuisson certains liquides intercellulaires, puis on remplace ces liquides par un liquide adéquat. Pendant la durée du traitement, l'enceinte reste immobile.

La présente invention consiste à soumettre la viande à un traitement qui réduit considérablement ou élimine totalement la libération d'exudats et qui permet une durée de conservation accrue de la viande, notamment de la viande rouge, sans qu'elle prenne une coloration désagréable, celle-ci prenant, au contraire, lors du traitement et gardant ensuite une couleur fraîche, rougeoyante pour la viande rouge.

Ledit traitement selon l'invention a aussi pour effet d'attendrir considérablement la viande. Jusqu'ici, il était connu d'attendrir la viande au moyen d'appareils munis d'aiguilles pénétrant dans les morceaux et animées d'un mouvement vibratoire.

Ce procédé, bien que procurant un résultat satisfaisant, se révéla catastrophique au point de vue de l'hygiène. Les aiguilles introduisaient des germes en profondeur dans la viande ou, à partir d'un morceau défectueux, contaminaient tous les autres traités ultérieurement. L'emploi de tels appareils fut interdit et, comme c'était le seul moyen connu, depuis, la viande n'est plus attendrie, si bien qu'un pourcentage important de la production, notamment de viande rouge, est décoté bien que présentant d'excellentes qualités nutritives et gustatives.

Un autre objet de la présente invention consiste donc à attendrir la viande sans conséquences néfastes du point de vue de l'hygiène.

Les objets de l'invention mentionnés ci-dessus, ainsi que d'autres, sont atteints comme le définit la revendication 1 ci-jointe et les revendications dépendantes.

Selon une autre caractéristique de l'invention, ladite enceinte tourne sur elle-même à la manière d'une baratte lors des cycles basse pression-haute pression.

L'invention est également un procédé de décongélation de la viande consistant à introduire des morceaux congelés dans l'enceinte sus-mentionnée, à y faire le vide et à y établir ensuite une pression supérieure à la pression atmosphérique au moyen d'un gaz comprimé, tel que de l'air, de préférence stérile, le cycle vide-pression étant répété plusieurs fois pendant la décongélation.

Enfin, le procédé de l'invention est également satisfaisant quand il est appliqué à de la viande précédemment décongelée.

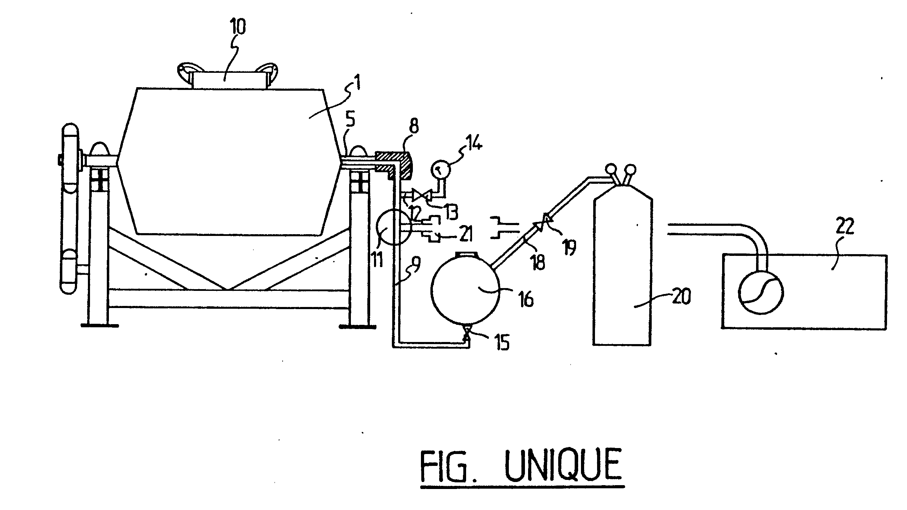

Des essais ont été effectués au moyen d'un appareil pouvant servir également à mettre en oeuvre un procédé de saumurage de viandes et qui est représenté sur le dessin joint. Un appareil, similaire pour l'essentiel à ce dernier, et ledit procédé de saumurage sont décrits dans le brevet français No. 2 394 250 déposé le 27 avril 1977 au nom de la présente demanderesse.

L'appareil représenté sur le dessin comprend une enceinte du genre baratte 1 pouvant tourner sur elle-même au moyen d'un moteur. Par son axe de rotation 5 et un joint tournant creux 8, l'intérieur de la baratte 1 communique avec une conduite extérieure 9. La baratte 1 comporte encore une porte étanche 10 capable, fermée, de supporter à l'intérieur un vide de quelques torrs et une surpression de quelques bars.

La conduite extérieure 9 relie le joint tournant 8 à une dérivation 12 sur laquelle sont montées quatre vannes d'arrêt 11, 13, 15 et 19. La vanne 11 est une vanne de mise à l'air libre. La vanne 13 relie la dérivation 12 à un ensemble de mise sous vide 21, 22. La vanne 15 est reliée à un ballon 16 et la vanne 19 est reliée par une conduite 18 à une source 20 de gaz comprimé, tel que de l'air, de préférence stérile.

Le ballon 16 est prévu pour contenir la saumure avant le démarrage des opérations quand on fait du saumurage tel que l'enseigne le brevet FR-A-2 394 950 précité.

Donc, pour mettre en oeuvre le procédé de l'invention, la vanne 15 entre le réservoir 16 et la dérivation 12 reste fermée en permanence. Dans un appareil spécialement prévu pour mettre en oeuvre le procédé de l'invention, on supprimerait la vanne 15 et le ballon 16.

Initialement, les vannes 13, 15 et 19 sont fermées, seule la vanne de mise à l'air libre 11 est ouverte. On ouvre la porte 10 pour verser dans la baratte 1 la masse de morceaux de viande à traiter, puis on referme la porte 10. On met la baratte en rotation, puis on ferme la vanne 11. On fait le vide dans la baratte 1 en ouvrant la vanne 13 et en faisant fonctionner la pompe à vide 22. Quand on a obtenu le vide désiré que la pompe peut atteindre, on ferme la vanne 13. Après une première temporisation prédéterminée, on ouvre la vanne 19 pour introduire de l'air sous pression dans la baratte 1. On contrôle la pression au moyen d'un capteur 14 sur la dérivation 12. Quand le niveau de pression désiré est atteint, on ferme la vanne 19. Après une deuxième temporisation prédéterminée, on ouvre la vanne 13 pour faire chuter la pression de gaz dans la baratte. On suit la baisse de pression à l'aide du capteur, puis on ferme la vanne 13 quand le vide désiré est obtenu. On renouvelle plusieurs fois les opérations d'abaissement et d'augmentation de pression avant de remettre définitivement la baratte à l'air libre. A ce moment, on ouvre la porte 10 et l'on recueille les morceaux de viande.

Une première série d'essais furent effectués dans lesquels le traitement décrit ci-dessus fut appliqué à des morceaux de viande rouge fraîche. On remarqua d'abord que la viande n'avait pas libéré d'exudats dans la baratte lors du traitement et qu'elle était considérablement attendrie. La viande traitée fut ensuite stockée en chambre froide. Là non plus, elle ne libéra pas d'exudats, ou tout au moins très peu par rapport à une viande non traitée. On remarqua ensuite qu'elle pouvait séjourner plus longtemps en chambre froide sans s'abîmer et sans prendre notamment une coloration brunâtre désagréable mais en conservant, au contraire, une couleur fraîche rougeoyante.

Lors d'une autre série d'essais, la viande fut congelée après avoir été traitée. Comme précédemment, la viande fut considérablement attendrie et, de plus, la perte d'exudats lors de la décongélation fut considérablement diminuée.

On procéda à une troisième série d'essais où des morceaux de viande congelée normalement furent introduits dans une baratte. Tout en faisant tourner celle-ci, on réalisa des cycles de basse pression-haute pression pendant toute la durée de la décongélation. On se rendit compte, encore, que la viande ne libéra que très peu d'exudats et qu'elle était considérablement attendrie. De plus, les pertes de poids après cuisson furent très diminuées. Des résultats identiques furent obtenus en appliquant le traitement à de la viande précédemment décongelée.

Lors des différents essais, la viande traitée fut soumise à la cuisson et l'on remarqua que les pertes de poids résultantes étaient considérablement amoindries.

Dans ce qui précède, on a défini un cycle comme consistant en une phase d'abaissement de pression suivie d'une phase d'augmentation de pression. Ceci ne signifie pas que juste avant le rétablissement de la pression atmosphérique et l'ouverture de cette dernière en fin de traitement, on soit en phase de haute pression. Selon les cas, on peut terminer par une phase de haute pression ou une phase de basse pression, de même qu'on peut rétablir la pression atmosphérique de façon progressive.

En pratique, des essais se sont révélés satisfaisants où, d'une phase à l'autre, la pression variait entre quelques kPa (tors) et un peu moins de 0,4 MPa (4 bars). Ces valeurs ne sont données qu'à titre indicatif.

Le procédé de traitement de l'invention peut, bien-sûr, s'appliquer à toutes les viandes, y compris volailles et gibiers. Il peut également être utilisé pour le poisson.

## Revendications

1. Procédé de traitement de la viande pour l'attendrir et/ou améliorer sa tenue et son aspect à la conservation, caractérisé en ce qu'il consiste à introduire la viande dans une enceinte fermée du genre baratte à jambons, à la faire tourner, à y faire le vide, puis à y établir une pression supérieure à la pression atmosphérique en utilisant de l'air comprimé stérile, puis à arrêter la rotation de ladite enceinte et à la mettre à la pression atmosphérique pour en retirer la viande traitée.

2. Procédé de traitement selon la revendication 1, caractérisé en ce que le cycle consistant à faire le vide dans l'enceinte et a y établir ensuite une pression supérieure à la pression atmosphérique est répété plusieurs fois.

3. Procédé de traitement selon la revendication 1 ou 2, caractérisé en ce que la phase de cycle précédant le retour à la pression atmosphérique pour l'ouverture de l'enceinte et le retrait de la viande est une phase de vide.

4. Procédé de traitement selon l'une des revendications 1 à 3, caractérisé en ce qu'il est appliqué à de la viande congelée pendant sa décongélation.

5. Procédé de traitement selon l'une des revendications 1 à 3, caractérisé en ce qu'il est appliqué à de la viande avant congélation.

6. Procédé de traitement selon l'une des revendications 1 à 3, caractérisé en ce qu'il est appliqué à de la viande après décongélation.

## Claims

1. Method of treating meat in order to tenderise it and/or improve its keeping qualities and appearance during preservation, characterised in that it consists in introducing the meat into a sealed enclosure of the ham churn type, rotating it, applying a vacuum to it then establishing in it a pressure higher atmospheric pressure using sterile compressed air, then stopping the rotation of the said enclosure and exposing it to atmospheric pressure in order to remove the treated meat from it.

2. Treatment method according to claim 1, characterised in that the cycle consisting in applying a vacuum to the enclosure and then establishing in it a pressure higher than atmospheric pressure is repeated several times.

3. Treatment method according to claim 1 or 2, characterised in that the cycle phase preceding the return to atmospheric pressure for opening the enclosure and withdrawing the meat is a vacuum phase.

4. Treatment method according to claims 1 to 3, characterised in that it is applied to frozen meat during its defrosting.

5. Treatment method according to one of claims 1 to 3, characterised in that it is applied to meat before freezing.

6. Treatment method according to one of claims 1 to 3, characterised in that it is applied to meat after defrosting.

## Patentansprüche

1. Verfahren zur Behandlung von Fleisch, um es mürbe zu machen und/oder seine Lagereigenschaften und seine äußere Erscheinung während der Konservierung zu verbessern, dadurch gekennzeichnet, daß es darin besteht, das Fleisch in einen dichten Behälter des Butterfaßtyps einzutragen, ihn zu drehen, ein Vakuum daran anzulegen, dann darin einen Druck oberhalb des Atmosphärendrucks, unter Verwendung steriler Druckluft zu erzeugen, dann die Drehung des besagten Behälters zu stoppen und ihn Atmosphärendruck auszusetzen, um das behandelte Fleisch daraus zu entnehmen.

2. Behandlungsverfahren nach Anspruch 1, dadurch gekennzeichnet, daß der Zyklus, ein Vakuum an den Behälter anzulegen und dann darin einen Druck oberhalb des Atmosphärendrucks zu erzeugen, mehrere Male wiederholt wird.

3. Behandlungsverfahren nach Anspruch 1 oder 2, dadurch gekennzeichnet, daß die Zyklusphase, die der Rückkehr zum Atmosphärendruck für die Öffnung des Behälters und die Entnahme des Fleisches vorausgeht, eine Vakuumphase ist.

4. Behandlungsverfahren nach Ansprüchen 1 bis 3, dadurch gekennzeichnet, daß es angewendet wird auf gefrorenes Fleisch während seines Auftauens.

5. Behandlungsverfahren nach einem der Ansprüche 1 bis 3, dadurch gekennzeichnet, daß es angewendet wird auf Fleisch vor dem Einfrieren.

6. Behandlungsverfahren nach einem der Ansprüche 1 bis 3, dadurch gekennzeichnet, daß es angewendet wird auf Fleisch nach dem Auftauen.

FIG. UNIQUE